# EUROPEAN PATENT APPLICATION

(11) **EP 4 610 200 A1**
(43) Date of publication of application: **03.09.2025**
(21) Application number: 24168896.9
(22) Date of filing: 08.04.2024
(51) Int. Cl.: B65G 21/20, B65G 39/07, F16C 13/00, B65G 39/18, B65G 13/07, B65G 23/08

(54) **CONVEYOR ROLLER**

(30) Priority: 27.02.2024 EP 24159826
(71) Applicant: Interroll Holding AG, 6592 Sant' Antonino (CH)
(72) Inventor: Rose, Jonas, 41836 Hückelhoven (DE); Langensiepen, Dominik, 41836 Hückelhoven (DE); Brecht, Maximilian, 41836 Hückelhoven (DE)
(74) Representative: Kohlhof, Stephan

(57) **Abstract**

Conveyor roller (3);
comprising
- a roller tube (31) having an outer surface (311);
- a functional attachment (7) is attached to the outer surface (311) of the roller tube (31); the functional attachment (7) comprising a functional element (73), which is held in a rotatably fixed manner to the roller tube (31);

wherein the functional attachment (7) is fixed to the roller tube (31) in a press fit manner.

## Description

The invention refers to a conveyor roller.

The catalog "Interroll Conveyor Roller" (available under https://www.interroll.com/fileadmin/Downloads/Catalogs/Rollers/Conveyor_Roller_Catalog_EN .pdf, dated 07/2023), shows on page 27 a conveyor roller having a flange for laterally guiding conveyed objects and prevent those from lateral wandering. The flange is welded to the zinc-plated roller tube (see page 18).

In particular if the roller tube has an anti-corrosive coating, in particular a zinc-based coating, attaching components to the roller tube by welding provides several disadvantages, which is widely discussed in WO 2022/171541 A1.

Therefore it is the object of the present invention to provide an improved conveyor roller.

The invention comprises a conveyor roller according to the main claim; embodiments are subject of the subclaims and the description.

According to the present invention the functional attachment is fixed to the roller tube by a press fit instead of welding. The press fit does not have any impact on the corrosion protective layer. At the same time the press fit provides a reliable and strong fixation.

The press fit can be made at any time and does not require any specific preparations and/or follow-ups in a factory; so the press fit can also be performed on site at the end-user.

An example embodiment of the invention is described in more detail with the help of the figures; herein show
- fig. 1: a basic conveyor zone in perspective view;
- fig. 2: a part of an inventive conveyor roller in perspective view;
- fig. 3: the part of figure 2 in side view;
- fig. 4: components of the functional attachment of the roller in figure 2 separated in perspective view;
- fig. 5: the part of figure 2 in longitudinal section;
- fig. 6: an enlarged detail of the longitudinal section indicated with X1 in figure 5;
- fig. 7: an amendment to the roller according to figure 2 in partial longitudinal section;
- fig. 8: another amendments to the roller according to figure 2 in longitudinal section;
- fig. 9: an enlarged detail of the longitudinal section indicated with X2 in figure 8;
- fig 10: a perspective view of the combined outer and contact ring of the amendment according to figure 7.

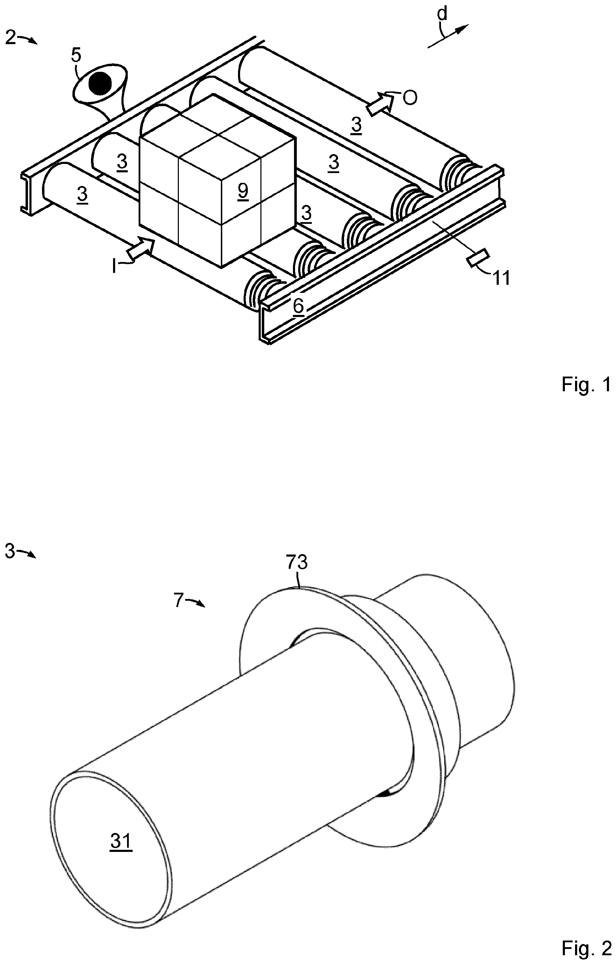

Figure 1 shows an exemplary conveyor zone 2, comprising several conveyor rollers 3. An object 9 is linearly conveyed from an inlet I to an outlet O along a conveying direction d.

By means of a presence sensor 5, the presence of a conveyed object 9 arranged within the conveyor zone 2 can be determined. The presence sensor 5 thereby generates a sensor signal (not shown) to a local zone controller 11.

The conveyor rollers 3 and the presence sensor 5 are attached to a common support frame 6. The conveyor rollers 3 of several conveyor zones 2 can be attached to a common support frame 6.

The roller has a cylindrical outer surface 311, which is provided with a corrosion protective layer, such as a zinc-based layer.

In the embodiment the conveyor is a motorized or non-motorized roller, where the conveyor rollers 3 form the contact surface for the objects 9. In an alternative embodiment the conveyor roller 3 is a drum motor, where an outer surface contacts a conveyor belt, on which the object 9 is located.

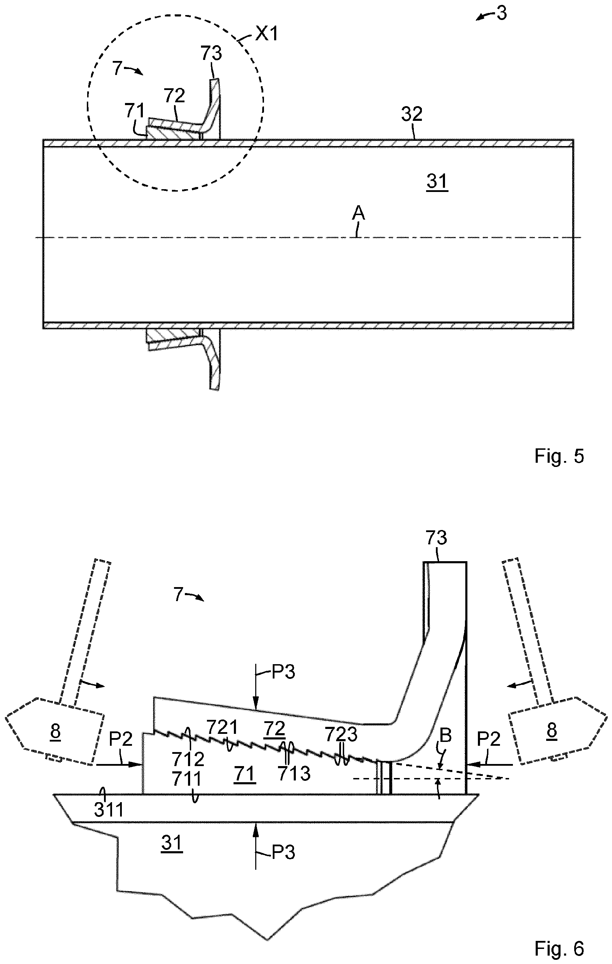

Figures 2 to 6 are described together. A conveyor roller 3 comprises a cylindrical roller tube 31. A functional attachment 7 is attached to the roller tube 31. The functional attachment 7 has a functional element 73, which is intended to cooperate with another device, which is in interaction with the conveyor roller 3.

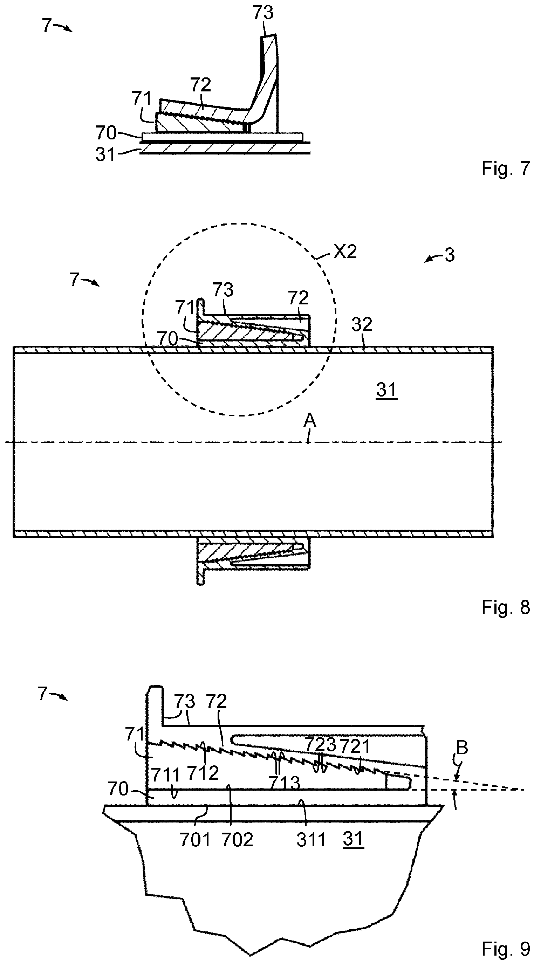

In the present embodiment the functional element 73 is a guiding flange, interacting with the conveyed object 9. Here the guiding flange 73 is used as a lateral stop, keeping the object 9 within a central area of the roller conveyor 3. In another embodiment the functional element 73 may be a drive sprocket attached to a conveyor roller 3 (in particular a drum motor) and in particular adapted to cooperate with a modular belt (e.g. similar functionality of the device disclosed in US 2022/0306395 A1). In another embodiment the functional element 73 may be a protective collar (see figure 8 and 9).

For attaching the functional element 73 with the roller tube 31, the functional attachment 7 has a wedge 71, which is in this embodiment a wedge ring, and an outer ring 72. The functional element 73 is attached to the outer ring 72 in an integral manner. It is also possible that the functional element 73 is made separately to the outer ring 72 and attached via another method.

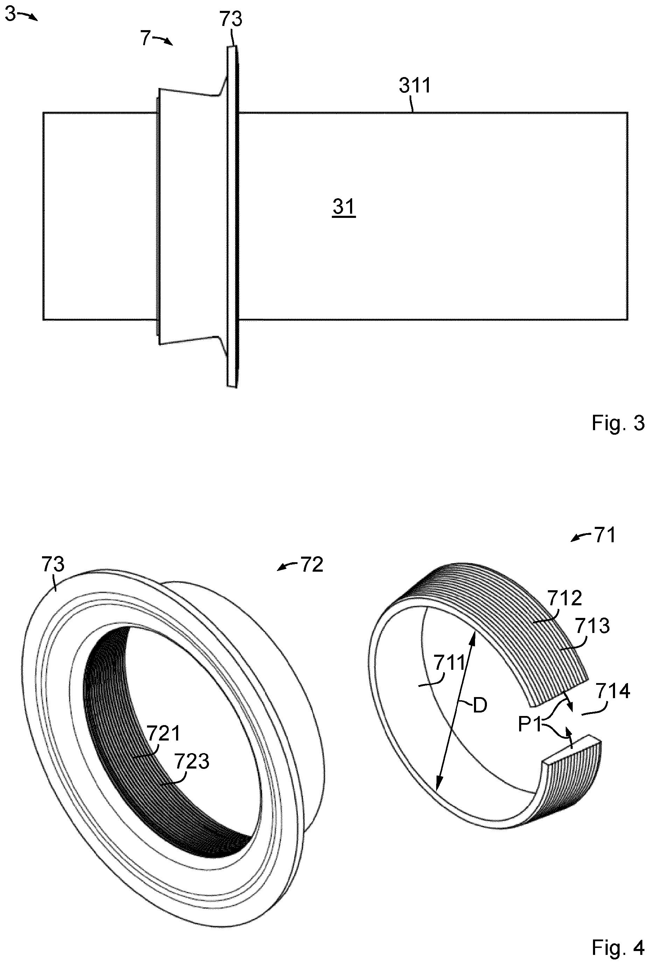

The wedge 71 is not closed in the circumferential direction but has a circumferential gap 714. This enables, that an inner diameter D of the wedge 71 is variable within a certain range (see arrow P1 in figure 4).

An inner surface 711 of the wedge 71 has a cylindrical shape and contacts the cylindrical outer surface 311 of the roller tube 31. Due to the variability of the diameter D, the wedge 71 can be attached to roller tubes 31 of different diameters.

An outer surface 712 of the wedge 71 has a conical shape, where the outer surface 712 is arranged relative to the inner surface of the outer ring 721 at an angle B. The angle B may be in the range of 2° - 15°, more preferably in the range of 4° - 12°.

The outer ring 72 is closed in the circumferential direction.

An inner surface 721 of the outer ring 72 has a conical shape, where the inner surface 721 is arranged in the same manner as the outer surface 712 of the wedge 71, at the angle B.

During assembly of the conveyor roller 3 the wedge 71 is attached on the roller tube 31. Thereby the axial position of the wedge 71 on the roller tube 31 can be adjusted as required. Thereby the circumferential gap 714 enables that the wedge 71 is held with a certain play on the roller tube 31, thereby contacting the roller tube 31 independently from any variations in the diameter D of the roller tube 31.

When the wedge 71 is located at the desired position, the outer ring 72 is attached on the wedge 71. Thereby the inner surface 721 of the outer ring 72 contacts the outer surface 712 of the wedge 71. Now the wedge 71 and the outer ring 72 are pressed against each other in the axial direction by means of a pressing tool 8. The pressing tool 8 provides an axial pressing force P2, pressing the outer ring 72 against the wedge 71 in the axial direction. Due to the inclined outer surface 712 of the wedge 71 and the inclined inner surface 721 of the outer ring 72, the axial pressing force P2 results in a radial pressing force P3, radially pressing the wedge 71 between the roller tube 31 and the outer ring 72. This leads to a fixation of the outer ring 72 and the wedge 71 on the roller tube 31.

To prevent an unintended release of the press fit connection, the outer surface 712 of the wedge 71 is provided with an outer toothing 713 and the angled inner surface 721 of the outer ring 72 is provided with an inner toothing 723. The toothings 713, 723 are arranged in a manner to enable the outer ring 72 being pressed onto the wedge 71, but to prevent, that the outer ring 72 is released as soon as the axial pressing force P3 is released.

The term "axial" refers to the direction of an axis A of rotation of the conveyor roller 3.

Figure 7 shows an amendment to the previous embodiment. Here the wedge 71 does not directly contact the outer surface 311 of the roller tube 31. Instead a contact ring 70 is arranged between the wedge 71 and the roller tube 31. The contact ring 70 may provide protection to the outer surface 311 of the roller tube 31 during assembly.

The remaining features comply to the previous embodiment.

Figures 8 to 9 show a further amendment to the conveyor roller 3 of figure 2 based in the amendment of figure 7. Here, also the contact ring 70 is provided between the wedge 71 and the roller tube 31.

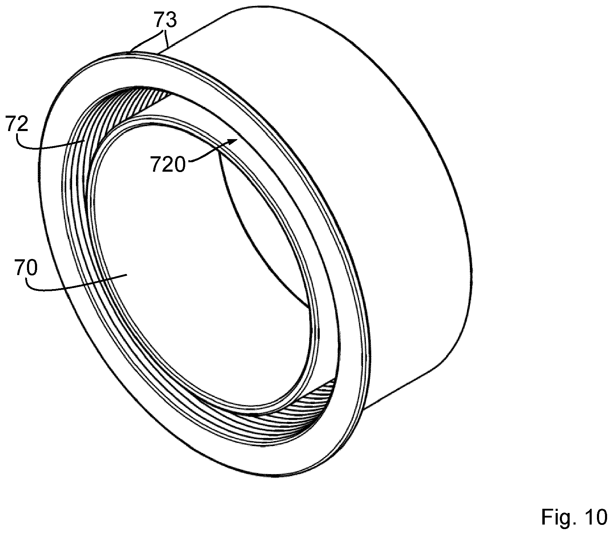

The contact ring 70 is made in one piece with the outer ring 72 described in the embodiment of figure 7. Accordingly the combined inner ring and the outer ring provide an annular accommodation space 720 (see figure 10) for the wedge 71.

The contact ring 70 has an inner surface 701 contacting the roller tube 31 and an outer surface 702 contacting the wedge 71. Instead of the outer ring 72, the contact ring 70 may comprise the angled surface cooperating with the wedge 71 to generate the radial pressing force (this is also applicable to the embodiment of figure 7).

The remaining features comply to the previous embodiments.

### List of reference signs → separat

- 2: conveyor zone
- 3: conveyor roller
- 31: roller tube
- 311: outer surface
- 5: presence sensor
- 6: support frame
- 7: functional attachment to roller tube
- 70: contact ring
- 701: inner surface of contact ring
- 702: outer surface of contact ring
- 71: wedge
- 711: inner surface of wedge
- 712: outer surface of wedge
- 713: outer toothing of wedge
- 714: circumferential gap of wedge
- 72: outer ring
- 720: annular accommodation space
- 721: inner surface of outer ring
- 723: inner toothing of outer ring
- 73: functional element / guiding flange
- 8: pressing tool
- 9: object to be conveyed
- 11: zone controller
- d: conveying direction
- A: axis
- B: conus angle
- D: diameter
- I: inlet
- O: outlet
- P1: circumferential variability
- P2: axial pressing force
- P3: radial pressing force

## Claims

1. Conveyor roller (3);
comprising
- a roller tube (31) having an outer surface (311);
- a functional attachment (7) is attached to the outer surface (311) of the roller tube (31);
the functional attachment (7) comprising a functional element (73), which is held in a rotatably fixed manner to the roller tube (31);
**characterized in**
**that** the functional attachment (7) is fixed to the roller tube (31) in a press fit manner.

2. Conveyor roller (3) according to the preceding claim,
**characterized in**
**that** the functional attachment (7) comprising
- an outer ring (72);
- a wedge (71), in particular a wedge ring, located between the outer ring (72) and the roller tube (31);
wherein the functional element (73) is attached to the outer ring (72).

3. Conveyor roller (3) according to the preceding claim,
**characterized in**
**that** the wedge (71) is arranged between the outer ring (72) and the roller tube (31) in a press fit manner.

4. Conveyor roller (3) according to any of claims 2 or 3,
**characterized in**
**that** an outer surface (712) of the wedge (71) is an angled surface, where the outer surface (712) is arranged relative to the outer surface (311) of the roller tube (31) at a conus angle (B) of in particular 2° - 15°,
**that** an inner surface (721) of the outer ring (72) has an angled shape, where the inner surface (721) is arranged relative to the outer surface (311) of the roller tube (31) at the same conus angle (B).

5. Conveyor roller (3) according to any of claims 2 to 4,
**characterized in**
**that** the outer surface (712) of the wedge (71) is provided with an outer toothing (713), the inner surface (721) of the outer ring (72) is provided with an inner toothing (723);
wherein the toothings (713, 723) interact in a manner
- to enable the outer ring (72) being moved onto the wedge (71) in a first direction and
- to prevent the outer ring (72) being released in a second direction opposite to the first direction.

6. Conveyor roller (3) according to any of the preceding claims,
characterized
that the wedge (71) is a wedge ring and comprises a circumferential gap (714).

7. Conveyor roller (3) according to any of the preceding claims,
wherein the functional element (73) is selected out of a
- guiding flange,
- a drive sprocket,
- a protective collar.

8. Conveyor roller (3) according to any of the preceding claims,
wherein the outer surface (311) of the roller tube (31) is provided by a corrosion protective layer, such as a zinc-based layer.

9. Conveyor roller (3) according to any of the preceding claims, wherein the conveyor roller (3) is a motorized roller including an internal drive motor.
